Europäisches Patentamt

European Patent Office

Office européen des brevets

(19)

(11) Publication number:

**0 399 670**
**A2**

## EUROPEAN PATENT APPLICATION

(12)

(21) Application number: 90304625.8

(22) Date of filing: 27.04.90

(51) Int. Cl.5: **G01C 23/00, G05D 1/06,**
**G01S 13/94**

(30) Priority: 25.05.89 GB 8912026
26.01.90 GB 9001828

(43) Date of publication of application:
**28.11.90 Bulletin 90/48**

(84) Designated Contracting States:
**DE FR GB IT NL SE**

(71) Applicant: **BRITISH AEROSPACE PUBLIC**
**LIMITED COMPANY**
**11 Strand**
**London WC2N 5JT(GB)**

(72) Inventor: **Schofield, Ian England**
**Warton Aerodrome**
**Preston, Lancs, PR1 8UD(GB)**
Inventor: **O'Leary, Sarah Joanne**
**Warton Aerodrome**
**Preston, Lancs, PR1 8UD(GB)**

(74) Representative: **Eastmond, John et al**
**British Aerospace plc Corporate IPR**
**Department, Headquarters P.O. Box 87**
**Building Q191 Royal Aerospace**
**Establishment**
**Farnborough Hants GU14 6YU(GB)**

(54) Airborne computer generated image display systems.

(57) An airborne imaging system capable of display-
ing on a visual display unit (VDU) an accurate repre-
sentation of the outside world. The system enables
the pilot to fly an aircraft without having any direct
visual contact with the outside world. A computer
generated image of stored geographical data is con-
tinually updated by information from aircraft-mounted
sensors. In a preferred embodiment, images repre-
senting scene features such as pylons, bridges,
roads, etc are accessed from a look-up table and
overlaid on the VDU picture.

EP 0 399 670 A2

## AIRBORNE COMPUTER GENERATED IMAGE DISPLAY SYSTEMS

The present invention relates to display systems for displaying images generated by computer. In particular the invention relates to computer generated image display systems carried by aircraft to present a variety of aircraft situation and status information to a pilot. More especially the invention relates to such display systems which present the pilot with a perspective view of the scene derived from previously stored geographical data relating to the land mass in the operational area and from real-time positional data provided by the aircraft's navigational system ahead of the aircraft. Such a scene will include the ground and any obstacles upon it whenever the aircraft is flying at low level.

It is known to provide military aircraft, particularly those designed to fulfil a ground target attack or air to air combat role, with a variety of displays including head-up displays, (HUDs) where the display concerned is superimposed on the pilot's forward view through the cockpit canopy by an optical projection system, head-down displays (HDDs), and helmet-mounted display (HMDs), which are similar to head-up displays but are projected onto the pilots helmet visor. HUDs and HMDs are generally used to provide aircraft attitude, target and weapon readiness information whereas detailed navigation information such as moving maps, computer and aircraft sensor outputs are generally provided on HDDs in the cockpit on one or more console mounted displays. In some proposals all the information required by the pilot may be presented selectively on a single display in the cockpit using peripherally mounted screen function control switches.

Airborne computer generated image (ACGI) systems have been proposed which generate perspective terrain views of the outside world from a combination of pre-stored geographical data and from signals provided by the aircraft navigational system e.g .the inertial navigation system (INS). Such ACGI systems essentially complement the pilot's view from the cockpit or during periods of poor visibility complement displays produced by aircraft sensors such as video cameras, infra-red detectors or radar. ACGI systems are intended to reduce the pilot's overall visual task load. However, hitherto no pilot, other than one in training on a ground based aircraft simulator, has been required to fly a complete all-weather mission from take-off to landing relying solely on a real-time computer generated image of the outside world displayed to him within the cockpit by such an ACGI system. Moreover, until recently the full operational potential offered by the introduction of such ACGI systems was hampered by the lack of suitable high speed digital processors and high capacity mass storage media.

Recent advances in the field of computers, in terms of their speed of operation and memory size, have made it feasible to consider an aircraft having a video display of the outside world generated by sensors and enhanced by ACGI displayed on a HDD, or ACGI overlaying the real outside world on a HUD.

A typical mission for an aircraft by the type just described might be a low-level mission commencing with take-off, proceeding through on-route cruise, then destination confusion and surface-to-air missile site evasion manoeuvres, a run towards the target using opportunity terrain features for radar detection avoidance, followed by target acquisition, attack, escape, and finally low-level return and landing. During these various phases of the flight the pilot will require a real-time display showing perspective views of departure corridors, obstructions, terrain, threats and target and landing site, In the known proposals such perspective views are provided to the HDD by aircraft sensors such as infra-red, television, and radar detectors feeding video signals to one or more cathode ray tube, liquid crystal, electroluminescent or plasma discharge displays. These displays are enhanced during periods of poor reception by the ACGI system. In the low-level mission described such displays are clearly flight critical.

A major disadvantage of the above proposed display system is that in order to ensure a high probability of mission success the aircraft must necessarily be flown in poor weather or under cover of darkness. In these circumstances the video display produced by the aircraft's sensors will always be of medium to poor quality and may seriously affect the pilot's confidence in the system.

Accordingly it is an object of the present invention to provide an airborne imaging system which will so consistently display an accurate representation of the world outside the aircraft that a pilot will have a high level of confidence in the system and will be able to fly an aircraft throughout the entire flight profile of a mission without any direct visual contact with the outside world.

A further object of the invention is to provide a method for genrating a data base of geographical features over which an aircraft is likely to fly.

According to the present invention an imaging system for an aircraft comprises a computer generated imaging system having at least one microprocessor for calculating from stored geographical data and positional data derived from the aircraft's navigational system the values of and for producing at an output a first set of signals representing parameters of elements of a scene currently in the vicinity of the aircraft, at least one aircraft mounted sensor for generating a second set of signals representing similar parameters of corresponding elements of the same scene, and characterised by comparator means for comparing each signal of the first set of signals with corresponding ones of the second set on signals and for producing control signals dependent on differences there between for varying an image generated by the computer generated imaging system accordingly.

There is considerable advantage in presenting the pilot with consistent quality ACGI by varying it in accordance with sensor signals using a system according to the invention. The ACGI system is only as reliable as the validity of its geographical data base and if new features, usually man-made such as buildings and roads, have been added to the operational land mass since the data base was constructed the aircraft could be put at risk, particularly during a low-level mission.

There are a number of benefits to be realised in considering a system for Civil Aircraft application. Navigation systems on passenger aircraft already provide high quality information and yet they still fly into mountains. In bad weather the compelling nature of an ACGI representation of the Outside World must increase situational awareness on the Flight Deck. Annoying low height warning audios can be switched off, but high quality visuals cannot be ignored.

In addition, all-weather takeoff and automatic landing (either stand-alone or augmenting current CAT-3 landing systems) can reduce operating costs by minimising diversion contingencies in two ways:-

. reducing fuel reserve (dead weight carried throughout the flight),

. minimising passenger transportation to final destination.

Also, taxi-ing in bad weather is made possible without assistance: all in all, airline scheduling becomes more reliable, reducing operating costs and improving reputation.

Preferably the system is provided with a plurality of aircraft mounted sensors of different types and a data fusion processor having inputs connected to receive signals from each of the sensors simultaneously and operative to analyse these according to a predetermined statistical algorithm to produce at an output the second set of signals which may then be the average or most common or most reliable signal of the input signals. The aircraft mounted sensors may be for example television cameras, scanning infra-red detectors, radar scanners or charge coupled devices. The sensors must all be capable of providing signals representing some physical parameter corresponding to elements of the scene in the vicinity of the aircraft.

Preferably at least one microprocessor is arranged to compare the control signals from the comparator means with a set of stored data representing control signals known to be produced by certain types of scene feature, and to vary the image produced by the computer generated image system according to the result of the comparison. The set of stored data may represent for example buildings, vehicles,, roads, pylons, bridges etc each associated in a look-up table with the control signal that feature is known to or expected to produce. At least one microprocessor may then be arranged to vary the image produced by the computer generated imaging system by inserting the appropriate feature correctly sized and oriented at the appropriate position or alternatively, where no feature represented by that particular type of control signal is found in the look-up table, by inserting a symbol or symbols warning of the presence of a new unknown feature in the vicinity of the aircraft.

The image produced by the imaging system is preferably formed on a flat panel display. The display area may be made up of a number of such flat panel displays mounted adjacent one another in an array at least partially surrounding the pilot. Each display in the array may then show part of the scene ahead so that the overall effect is that of a panoramic view of the scene around the aircraft. The display or displays may be flat-screen cathode ray tubes, liquid crystal displays, electro-luminescent displays or DC or AC plasma discharge displays. Part of the display area may be hingedly mounted in the cockpit so that it may be swung out of the way to permit pilot access to the seat or for emergency ejection purposes. When the display is pivoted back into place it may then form with a fixed area of the display the panoramic area display referred to above.

Preferably the computer generated imaging system includes a terrain reference navigation system driven by a radio altimeter and inertial navigation system to drive an outside world data base to produce frame signals for a display system. The navigation system preferably includes Kalman filtering with a global positioning system. The computer generated imaging system may use electronics conforming to a number of known architectures so that it may be realised in integrated circuit form, preferably very large scale integrated circuit form. The system is preferably digital. Suitable architectures are:

1 Pooled mission processor architecture using a high speed bus, a number of uncommitted signal processors and mass memories. At start up each processor is allocated initial functional duties while the mass memories are filled with appropriate data such as the land mass database. As the mission proceeds the processors share tasks to even out work load and processor failures may be accommodated by re allocating tasks according to redundancy algorithms.

2 Conventional serial architecture, comprising in series: a land-mass database; a land-mass data extractor to pull out a selection of the data base canted on the aircraft's current position; a transformation unit for transforming the aircraft's current position to world co-ordinates; a point-to-point pixel unit for producing digital pixel signals for every point on one "frame" of the scene to be viewed; a frame buffer for storing a complete frame of digital pixel signals; a video controller for taking digital pixel data from the frame buffer and passing it to the screen of the display as an analogue video signal; and, a flat panel display as described above. In an adaptation according to the invention the video controller may also be fed with overlay signals from the comparator means or from the look-up table library of control signals and features.

3 Multiple Pipeline Architecture, which is a logical extension of the serial system described above but using parallel data extraction from the land mass data base on say ten separate lines each associated with its own image store each looking after a particular small area of the screen. A depth buffer may be used to remove "hidden" surfaces from the display. In an adaptation according to the invention the video controllers of each small area of the screen would receive correspondingly selected signals from the comparator means or form the new features library or separate comparators may be provided for each line of the multiple pipe line for comparison with corresponding selected signals from the sensor data fusion means.

Those skilled in the art will realise that where various sources of video information are to be fused as described in a data fusion system and then compared with a real-time ACGI video output common synchronisation timing must be employed throughout the system. The processing rate of the whole system must be such as to give the pilot a real-time flicker free video enhanced display representing the outside world. Typical processing rates required of such a system using serial architecture are:

Frame rate:50Hz

Screen resolution of each display area: 512X 512 pixels.

Extraction rate of points from the geographical data base: 2,400 points per second

Transformation of points to outside world co-ordinates: 250,000 points per second.

Pixel by pixel transfer to frame buffer: 50 M pixels per second.

Comparison of sensor data fusion video with ACGI video: 250,000 points per second.

Look-up table overlay output rate: 50 M pixels per second.

Embodiments of the invention will now be described by way of example only and with reference to the following drawings of which:

Figure 1 is a block schematic diagram illustrating the video-enhanced ACGI system concept according to the invention, and

Figure 2 is a block schematic diagram illustrating the application of the video enhanced system concept to an ACGI system using serial architecture.

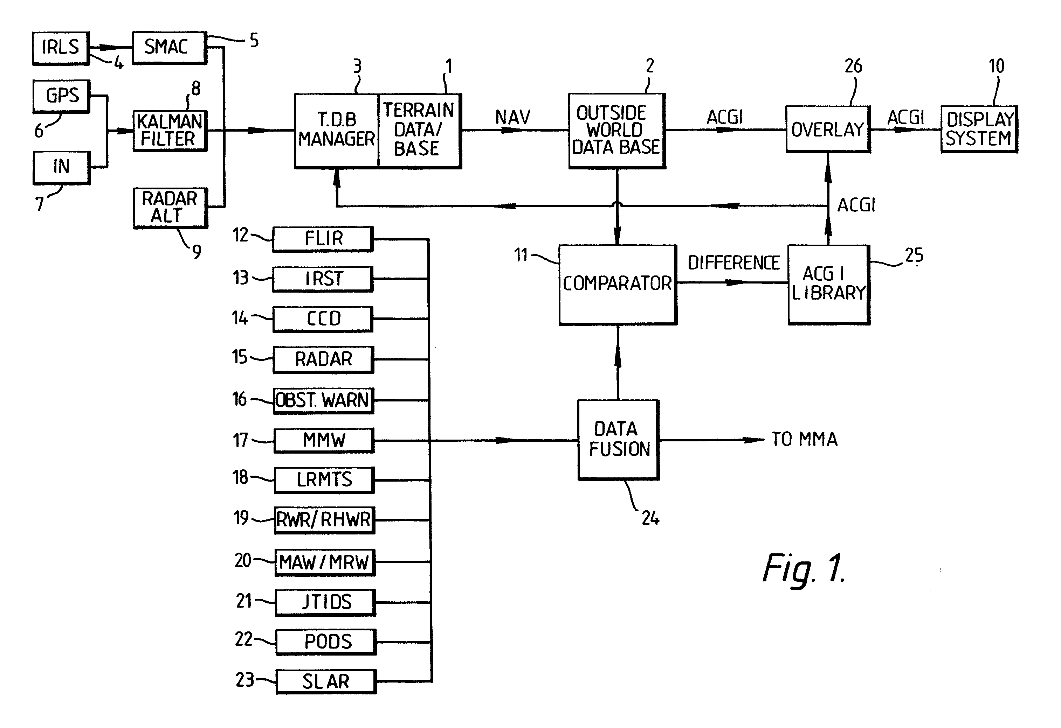

In Figure 1 an ACGI system comprises a terrain data base 1 containing pre-stored land-mass geographical data relating to features such as rivers, mountains valleys, roads, coastlines. The data base contains type, positional, height, colour and other data relating to these features for all points spaced every few metres all over the world, or at least over that portions of the world over which the aircraft will operate.

The terrain data base is divided into ground and culture data bases. The ground data base consists of a network of 50m sided rectangles with a spot height given for every intersection with colour information. The culture data base includes: 2D features such as roads and railways, with the end points and colour being stored for each rectangle; 3-d symbology for pylons, spires, chimneys with positional data symbol type and colour; block culture represented by polyhedra for example for urban areas and for forests. In addition to the terrain data base there may be provided a tactical data base for flight path and weapon site information, and a dynamic data base for the collection of new information on targets and threats gathered by the aircraft sensors during a mission. For clarity these are shown here.

Appropriate extracts from the terrain data base are fed. to an outside world data base (OSWDB) 2 under the control of a terrain data base manager (TDBM) system 3. The TDBM has inputs connected to receive navigational information from the infra-red Linescan system (IRLS) 4 via the SMAC 5, the global position system (GPS) 6 and inertial navigation (IN) system 7 via a Kalman Filter 8, and the radar altimeter 9 to ensure that the OSWDB remains centred on the aircraft's current position and heading.

The OSWDB produces frames of video information to drive a display, which may be an LCD,EL a gas plasma area display surrounding the pilot in the cockpit as described earlier. Preferably it is a full colour, high resolution LCD.

So far what has been described is a known ACGI system which in the past would have been used as a separate system to complement the view ahead as displayed by an aircraft sensor system such as a low light television system. The pilot would only have viewed the ACGI display when the image produced by the aircraft sensor or his own view through the cockpit was poor due to low light or bad weather. Figure 1 shows how that known system has been adapted so that the ACGI is the prime display system used by the pilot enhanced where necessary by information from aircraft sensors.

The adaptation comprises a video comparator circuit 11 connected to receive and compare the ACGI image with an image produced by one or more aircraft sensors. In the system shown the aircraft sensors used are, forward looking infra-red (FLIR) 12 infra-red search and track (IRST) 13, charge coupled device (CCd) 14, radar 15, obstruction warning device 16, millimetric radar (MMW) 17, Laser Ranger and Marked Target Seeker (LRMTS) 18, Radar Warning Receiver, Radar Homing and Warning Receiver (RWR/RHWR) 19, Missile Approach Warner and Missile Launch Warner (MAW/MLW) 20, joint tactical information distribution system (JTIDS) 21, Portable Data Store (PODS) 22 and sideways looking airborne radar (SLAR) 23. The outputs of all these sensors are fed to a data fusion microprocessor 24 which analyses the video signals produced by each and selects the average, best or majority video signal and produces a correlated video signal output to the comparator 11.

The purpose of the comparator is threefold:-

1) To check registration at every iteration, thus raising confidence in the accuracy of navigation and also harmonisation of the sensors.

2) To compare "snapshots" of the real-time sensor information with the ACGI and identify and display new man-made objects that have been erected, eg, radio masts, power lines, SAM sites. If these objects exist in an ACGI library 25 then they would be depicted in this way via an overlay 26, if not, then an edge representation will be overlayed. Both methods will be tagged to indicate the object is new.

3) To identify and display mobile targets such as tanks, APVs, AAA batteries, again if possible by tagged ACGI from the library.

The ACGI library 25 contains a look-up table relating particular new objects with their corresponding comparator output signals. The library generates video overlay signals to drive a display overlay processor 26. The overlay signals represent the appropriate new objects in their correct size, colour and location in relation to the main ACGI display scene. Where there is no essential difference between the sensor and ACGI signals the comparator 11 produces zero output and no overlay is produced. Where the output from the comparator 11 is a signal for which no corresponding object exists in the look-up table the ACGI library is activated to produce a standard symbol representing an unknown obstacle to be overlayed at the appropriate point on the display. The signals from the ACGI library 25 are also fed to the terrain data base manager 3 where they are recorded for permanent update of the TDB1 post-flight or to update the database during flight with known and unknown new object data.

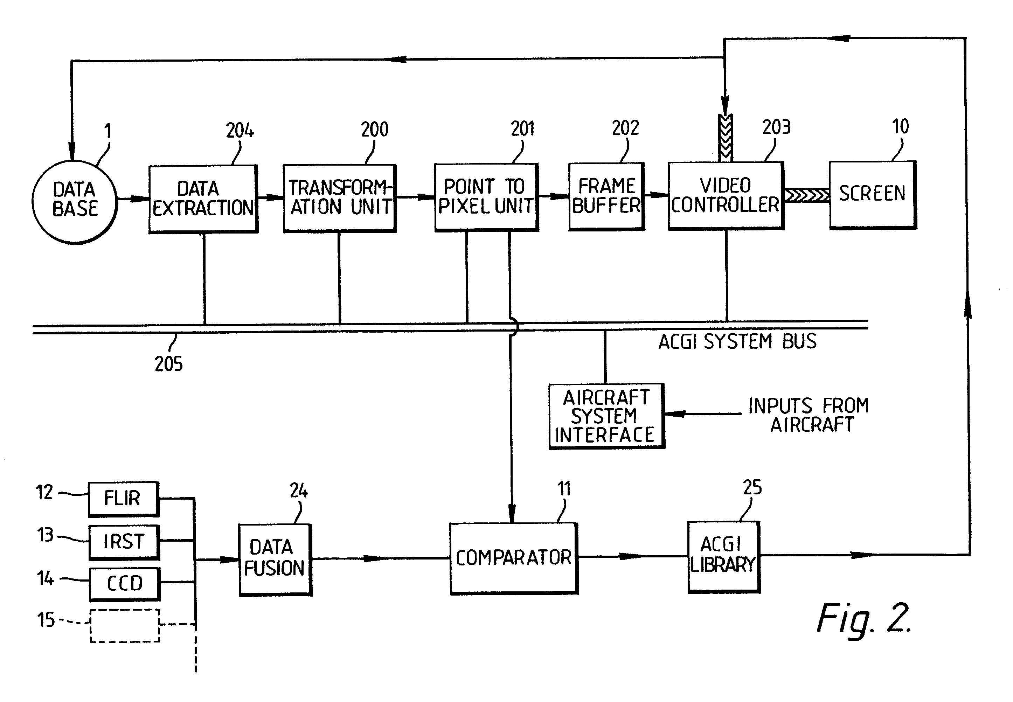

In Figure 2 the invention is shown applied to an ACGI system with serial architecture. Where sub-units of the system are similar to corresponding sub-units in Figure 1 they have been given the same reference numerals.

The ACGI system of Figure 2 has a single pipeline architecture with two main processing units, a transformation unit 200 and a point-to-pixel processing unit 201. A display buffer 202 and video controller interface the output of the processing unit 201 to a flat panel display 10, preferably as with Figure 1 a full colour high resolution LCD display.

A land mass or terrain data base 1 as before holds all land profile data in the operational area of interest in the form of spot heights at regular intervals, say every 50m. The actual working piece of land area is extracted from the overall data base 1 by means of a data extraction unit 204. The extract comprises a fast access memory from which the remainder of the system can work very quickly. As the aircraft moves in air space the small area extracted by the unit 204 is updated from the main data base 1 to keep the aircraft at the centre of the extract.

The transformation processor unit 200 receives world co-ordinates and the aircraft's attitude in 3-D air space and transforms the display area from the extract held in the unit 204 into co-ordinates which are converted to a 3-D perspective view of the land-mass in the vicinity of the aircraft.

The point-to-pixel processor 201 takes data points operated on by the transformation processor 200 and converts them to points on the flat display in say 512 x 512 pixel format. This process will include filling, shading and symbol overlay routines well known to those skilled in the art.

The frame buffer 202 is like a dummy screen. It comprises a large area memory arranged using a standard memory 'write' process and a shift register 'read' process to minimise the time to fill a complete screen with pixel information and maximise the time available to read data in as it is being processed.

A system bus 205 is used for communication and timing signals only and not for data transmission which is left to the pipeline per se.

A video controller 203 'reads' the frame buffer and drives the screen 10 accordingly.

What has been described so far with respect to Figure 2 may be considered a conventional known ACGI system which might be used in a ground simulator but in a real aircraft environment would only have been used hitherto as a complement to video sensor systems and the pilot's own view from the cockpit.

The adaptation of the ACGI system of Figure 2 to produce a video enhanced ACGI system to provide a prime display for a pilot of a closed cockpit aircraft comprises as with Figure 1 a comparator unit 11. The comparator 11 is arranged to compare sensor signals from FLIR 12, IRST 13, CCD 14, etc aircraft mounted sensors, correlated by the data fusion unit 24, with corresponding pixel data produced by the point-to-pixel unit 201 of the ACGI system.

As before the output of the comparator is a difference signal which is compared with stored difference signal/feature data in a look-up table/library 25. The difference signal will be zero provided the computer generated scene and the sensor scene are identical and the display 10 will then show the image produced by the ACGI system unvaried by the sensor outputs. However, if there is a difference in the scenes produced by ACGI and sensors, for example because a new man-made feature has been added to the real area of operation which was not known at the time the data base 1 was assembled or last up dated, then a difference signal will be produced. Certain new features will produce particular difference signals and the ACGI library 25 is designed to output particular symbology whenever such a difference signal is recognised as being in the look-up table. Where the difference signal is of a type not stored in the look-up table a default symbol is produced by the library 1. In all cases the symbols produced by the library 1 are superimposed on the display via the video controller 203 at the appropriate location with suitable depth and colour to match the ACGI current scene.

As before the ACGI library outputs may be used to update the land-mass data base 1 or be recorded for permanent update of the data base post flight so that on future missions the new feature will be expected without the need to resort to sensor detection of it for the second and subsequent occasions.

A terrain data base may be created by manually entering into a store large amounts of geographical information taken from photographs. This method is very labour intensive. Alternatively, the comparator 11 and ACGI library 25 may be employed to generate such a data base. In this case, data is gathered by use of an airborne video camera and recorder, taking photographs in clear weather along sufficient tracks to provide all aspect information of an area. Continuous accurate navigation data is recorded also to relate the visuals geographically. The video data is then re-played through the comparator 11 which analyses the visuals, using a large ACGI library from which to extract identified objects. The comparator's output then serves as a terrain data base 2 for future use with the imaging systems of Figures 1 and 2.

Many modifications and improvements to the sensor enhanced ACGI system described above will now suggest themselves to those skilled in the art. For example, in addition to the enhanced ACGI display the pilot may be provided with a second display, or a display selector, enabling him to view raw video from any sensor or the correlated output of the Data Fusion Processor 24. The output of the comparator 11 may also be connected to one or more pilot warning systems or even to the flight control computer so that for certain types of new feature detected evasive manoeuvres may be performed by the pilot or by the automatic flight control system respectively.

## Claims

1. An imaging system for an aircraft comprising a computer generated imaging system having at least one microprocessor (3) for calculating from stored geographical data (1) and positional data derived from the aircraft's navigational system (4-9) the values of, and for producing at an output a first set of signals representing parameters of elements of a scene currently in the vicinity of the aircraft, at least one aircraft mounted sensor (12-23) for generating a second set of signals representing similar parameters for corresponding elements of the same scene, and characterised by comparator means (11) for comparing each signal of the first set of signals with corresponding ones of the second set of signals and for producing control signals dependent on differences therebetween for varying an image generated by the computer generated imaging system accordingly.

2. An imaging system as claimed in Claim 1 having a plurality of aircraft-mounted sensors (12-23) and a data fusion processor (24) having inputs connected to receive signals from each of the sensors (12-23) simultaneously and operative to analyse the signals according to a predetermined statistical algorithm to produce at an output the second set of signals which is an average of the received signals.

3. An imaging system as claimed in Claim 1 or Claim 2 having at least one microprocessor arranged to compare the control signals from the comparator means (11) with a set of stored data (25) representing control signals known to be produced by specific types of scene feature, and to vary the image produced by the computer generated imaging system according to the result of the comparison.

4. An imaging system as claimed in any preceding claim in which the image produced by the imaging system is formed on a flat panel display (10) which partially surrounds the pilot of the aircraft and is hinge-mounted in the aircraft cockpit to facilitate pilot entry and exit and in which the display is made up of a plurality of panels mounted adjacent to one another.

5. A method of creating a terrain data-base using the imaging system according to Claim 3 and comprising the steps of;
recording the outputs of the imaging sensor (12-23) as the aircraft is flown over a section of terrain,
replaying said recorded outputs through the comparator (11) and,
comparing said recorded outputs with the stored data (25) to produce a modified sensor output which serves as a terrain data-base.

Fig. 1.

EP 0 399 670 A2

*Fig. 2.*

EP 0 399 670 A2